# EUROPEAN PATENT APPLICATION

(11) **EP 2 821 955 A1**
(43) Date of publication of application: **07.01.2015**
(21) Application number: 14172112.6
(22) Date of filing: 12.06.2014
(51) Int. Cl.: G06Q 50/06, G06Q 10/04

(54) **Energy demand reduction system and energy demand reduction method**

(30) Priority: 04.07.2013 JP 2013140737
(71) Applicant: Hitachi Ltd., Tokyo 100-8280 (JP)
(72) Inventor: Yuasa, Naohiro, Tokyo, 100-8280 (JP); Watanabe, Tohru, Tokyo, 100-8280 (JP); Hataya, Takayuki, Tokyo, 100-8280 (JP); Tsuzaki, Masao, Tokyo, 100-8280 (JP)
(74) Representative: MERH-IP Matias Erny Reichl Hoffmann

(57) **Abstract**

An incentive is determined before a customer reduces demand as matched with demand and supply situations at peak demand for supply. An energy demand reduction system includes: a demand-and-supply status acquiring unit 104 that, based on an amount of energy supplied from a supply facility and an amount of energy demand by forecasting demand according to a past demand performance, determines whether peak demand for supply of the energy is taken place and acquires a customer incentive expressing an incentive for a customer who reduces demand for the energy and correlation information in correlation with demand for the energy; an incentive calculating unit that determines a correlation incentive expressing an incentive corresponding to the correlation information and sends a load device using the energy, the customer incentive, and the correlation incentive to a controller 141 managing the load device 180; an incentive returning unit that acquires a demand reduction performance of the energy on the load device from the controller 141, evaluates the acquired demand reduction performance, returns an incentive under a situation expressed by the correlation information to the customer, and feeds back a result of the evaluation to the customer incentive; a display unit 150; an incentive calculating unit that, based on the customer incentive and the correlation incentive received from the demand reduction request server, finds an incentive for the customer under a situation expressed by the correlation information and displays the found incentive and the load device received from the demand reduction request server 101 on the display unit 150; a load control instruction unit 143 that instructs the load device 180 displayed on the display unit 150 to reduce demand for the energy; and a reduction information notifying unit 147 that sends a demand reduction performance of the energy performed at the load device 180 to the demand reduction request server 101.

## Description

### Background of the Invention

The present invention relates to techniques for an information system and a control system that control the amount of a reduction in demand in demand response (DR) in which a customer reduces energy demand at peak demand for energy supply.

In these years, demand is increased for resources related to energy such as electric power, gas, and heat and to infrastructures such as water supply on one hand, and there is a concern about short supply due to the halt of supply facilities, for example, on the other hand. A scheme for adjusting the balance between supply and demand includes DR in which a supplier requests a customer to reduce demand. In DR, there are a method for returning incentives such as a reward for actions of reducing demand and amounts reduced, and a method for varying rates with hours and the amount supplied. Generally, in DR, the method for returning incentives is popular because of influence due to rules and regulations in setting rates when energy is supplied and psychological influence that a customer favorably receives gift certificates, coupons, points, and rewards and reluctantly pays a high rate, for example.

DR is configured of an information system and a control system including a facility that supplies energy, a load device that consumes energy, a function and a device that detect peak demand for supply, a function and a device that request and notify a customer to reduce demand at the peak demand for supply, a device that measures the amount of energy consumed, a function and a device that calculate a charge and incentives for the amount of energy used, and so on.

For calculating an incentive (a reward) in the case where a customer reduces energy demand when demand is reduced, in many cases, a value is used that the amount of a reduction in demand is added to an incentive unit price returned to the reduction. For example, when the category of energy is electric power, in the case where electric power demand is reduced by a power of 30 KW, the incentive is "3,000 yen" where the amount of a reduction in demand is "30" and an incentive unit price per watt is "100 yen". Moreover, an incentive is sometimes defined as a value that a difference is calculated between the value of energy used at a point in time when demand is reduced and a reference value such as a contract demand and an energy use performance on a date similar to the date when demand is reduced.

Furthermore, the operations involved in incentives in DR are sorted into the following process: a process in which an incentive unit price is defined and an incentive to be returned is determined by adding the amount of a reduction in demand; and a subsequent adjustment process in which the calculated incentive is discounted from an energy use rate.

### Brief Summary of the Invention

In the field of electric power, there are techniques of adjusting the balance between supply and demand of energy. Japanese Patent Application Laid-Open Publication No. 2002-369380 describes an electric power supply system and a method for charging an electricity rate of the system. The inventions described in Japanese Patent Application Laid-Open Publication No. 2002-369380 describes that electric power customers are effectively encouraged to reduce power consumption by appropriate induction schemes through electricity rates more practically and simply to enable electric power supply control and that a method for charging an electricity rate is provided to enable more practical, simple calculation of electricity rates. For a method of implementing this, an electric power supply system is named, which includes: a power generator that generates electric power; a power consumption reduction request issuing unit that generates a power consumption reduction request signal when it is likely that electric power demand on the customer side exceeds a predetermined power value; an electric power determining unit that determines whether power consumption of the customer exceeds a preset power consumption reduction level; and a recording unit that compiles records when power consumption does not exceed the power consumption reduction level through a period specified by the power consumption reduction request signal.

However, in Japanese Patent Application Laid-Open Publication No. 2002-369380, the electric power supply system is a system that solves peak demand for supply by appropriate induction schemes through electricity rates from the viewpoint of a supplier. In DR, it is necessary to request a reduction in demand and respond to a reduction in demand by a variety of participators such as suppliers as well as customers or aggregators. In doing so, it is necessary to consider the actions and situations of customers. The following is specific problems.

For the first problem, a customer is induced to take an action of reducing demand. At this time, it is determined that power consumption does not exceed the power consumption reduction level through a period specified by the power consumption reduction request signal, and incentives are returned. Therefore, the customer can know the incentives after reducing demand. Thus, it is difficult to the customer to evaluate in advance whether the incentives are satisfactory to the action of reducing demand and to the amount of a reduction at a point in time when demand is reduced in the case where incentives are not fixed. More specifically, in the case where the customer is a company, the operations of factories are stopped to halt production, and in the case where the customer is a household, air conditioners are stopped to endure hot hours, for example. It is difficult to the customers to determine whether these actions are priced higher or lower than the values of incentives for reducing demand when demand is reduced. Therefore, in the case where many customers do not know the values, there is a concern whether customers take an action of reducing demand. In addition to this, in the process of determining whether incentives are returned, whether to return incentives is determined by the fact that power consumption does not exceed the power consumption reduction level through the specified period. Therefore, since the supplier calculates incentives after measuring the value of an electric power use performance in the specified period, it takes time until the completion of the incentive calculation process after requesting a reduction in demand, causing a concern about enormous personnel costs for many staff members and operators.

Moreover, the second problem will be described. The rate for reducing power consumption, which is an incentive, is calculated according to the degree of achievement in a reduction in power consumption. For the criteria for the degree of achievement in a reduction in power consumption, the power consumption reduction level, which is set at a rate for the contract demand for electricity, is applied to all the customers who precipitate in reducing demand. Furthermore, for determining whether incentives are returned, it is determined whether the power consumption reduction level is achieved. Thus, it is more advantageous to customers whose contract demand is great and who include many facilities more easily implement a large amount of a reduction in demand. However, since the number of facilities held and consumption hours are different in customers to participate in reducing demand, the values for the amount of electric power reduced and a reduction in demand are varied depending on customers. The evaluation criteria of the degree of achievement in a reduction in power consumption (the number of times) is not fair, which are uniform reference values.

Furthermore, the third problem will be described. The degree of achievement in a reduction in power consumption is evaluated based on the rate to the rate for the contract demand for electricity. However, in the case where there are many over-achieved customers, the supplier acquires the amount of a reduction in demand more than a necessary amount of a reduction in demand, and bears heavy incentives to return. In addition, when demand is reduced at high speed as by reducing demand all at once by customers, electric power is over-supplied to adversely affect electric power systems. Thus, there is a concern that power generating facilities are detached from electric power systems to cause stable power supply to be unstable and this leads to a power failure in the worst scenario.

Moreover, the fourth problem will be described. The control computer of the power supplier, which is a device configuring the electric power supply system, finely issues power consumption reduction requests by setting power consumption reduction levels. However, suppose that in the case where a large number of customers participate in reducing demand. In this case, the following is considered. When the control computer concentratedly issues a power consumption reduction request for individual customers and notifies the customers of the request, it is necessary to always perform the process involved in issuing a power consumption reduction request, or when a scheme for dynamically returning incentives to customers is provided, not based on the fixed incentive unit price to the amount of a reduction, it is necessary to always calculate and send incentives. At this time, the amount of calculation involved in the calculation process of incentives becomes enormous to cause process loads and network loads (congestion) between the electric power company and the customers.

It is an object of the present invention to solve peak demand for energy supply in which a supplier requests a customer to reduce demand or requests a customer to operate energy supply facilities held at the customer at peak demand for energy supply and offers incentives to the action or the amount of a reduction. In consideration of the demand and supply situations and the customer situations in reducing demand, for example, an appropriate incentive (a reward) to the effect of reducing demand is determined and presented to the customer before taking the action of reducing demand for controlling the amount of a reduction in demand.

In order to achieve the object, an energy demand reduction system according to an aspect of the present invention is an energy demand reduction system that reduces energy demand including a demand reduction request server and a controller. In the energy demand reduction system, the demand reduction request server includes: a demand-and-supply status acquiring unit configured, based on an amount of energy supplied from a supply facility and an amount of energy demand by forecasting demand according to a past demand performance, to determine whether peak demand for supply of the energy is taken place and to acquire a customer incentive expressing an incentive for a customer who reduces demand for the energy and correlation information in correlation with demand for the energy; an incentive calculating unit configured, when it is determined that the peak demand for supply is taken place, to determine a correlation incentive expressing an incentive corresponding to the correlation information, to send a load device using the energy, the customer incentive, and the correlation incentive to the controller managing the load device, and to request a reduction in demand for the energy; and/or an incentive returning unit configured to acquire a demand reduction performance of the energy on the load device from the controller, to evaluate the acquired demand reduction performance, to return an incentive under a situation expressed by the correlation information to the customer, and to feed back a result of the evaluation to the customer incentive. The controller includes: a display unit; an incentive calculating unit configured, based on the customer incentive and the correlation incentive received from the demand reduction request server, to find an incentive for the customer under a situation expressed by the correlation information and to display the found incentive and the load device received from the demand reduction request server on the display unit; a load control instruction unit configured to accept a manipulation from the customer and to instruct the load device displayed on the display unit to reduce demand for the energy; and/or a reduction information notifying unit configured to send a demand reduction performance of the energy performed at the load device in response to the instruction from the load control instruction unit to the demand reduction request server.

Moreover, an aspect of the present invention is also understood as an energy demand reduction method performed in the energy demand reduction system.

According to the aspects of the present invention, it is possible to provide an energy demand reduction system and an energy demand reduction method that determine an incentive before a customer reduces demand as matched with the demand and supply situations at peak demand for supply.

### Brief Description of the Drawings

Fig. 1 is a block diagram of a system according to an embodiment of the present invention;
Fig. 2 is a diagram of the table configuration of a database according to an embodiment of the present invention;
Fig. 3A is a diagram of an exemplary configuration of a customer table for storing information about customers;
Fig. 3B is a diagram of an exemplary configuration of a device table for storing information about load devices held at a customer;
Fig. 3C is a diagram of an exemplary configuration of a device reduction method table for storing information about control methods for the individual load devices;
Fig. 4A is a diagram of an exemplary configuration of a device state management table for storing information about consumption performances and reduction levels of the load devices in a time series;
Fig. 4B is a diagram of an exemplary configuration of a demand-and-supply status management table for storing information about demand and supply in a time series;
Fig. 5A is a diagram of an exemplary configuration of a demand reduction request table for holding the history of demand reduction requests;
Fig. 5B is a diagram of an exemplary configuration of a supply plan table for storing information about supply;
Fig. 6 is a sequence diagram of an overall operation flow according to an embodiment of the present invention;
Fig. 7 is a flowchart of a process involved in a demand-and-supply situation acquiring function, an incentive correction function, and a demand reduction request function according to an embodiment of the present invention;
Fig. 8 is a screen of a display unit of a controller for displaying incentives according to an embodiment of the present invention; and
Fig. 9 is a flowchart of a process involved in a reduction information management function and an incentive adjustment function according to an embodiment of the present invention.

### Detailed Description of the Invention

In the following, an embodiment of an energy demand reduction system and an energy demand reduction method according to the present invention will be described in detail with reference to the accompanying drawings.

In DR shown in the embodiment, electric power is taken as an example of a type of energy. However, DR according to the embodiment is applicable to various types of energy such as gas, water supply, and other types of natural energy. In the following, an electric power company that supplies electric power is assumed as an energy supplier, and ordinary households, factories, and commercial buildings are assumed as customers, for example.

An exemplary operation flow of DR according to the embodiment of the present invention will be described. First, for contract operations, an electric power company and a customer make a contract to participate in reducing demand. Moreover, the electric power company architects an environment individually for customers who make a contract in a demand reduction request server that registers information about load devices held at the customer and history information about actions on demand and actions of reducing demand, for example. Moreover, the electric power company arranges a supply plan for the day. The load device means a device and a system using electric power including an air conditioner and a light, for example.

Secondly, the electric power company forecasts hours in which demand exceeds supply to be peak demand for supply, and requests the contracted customers who participate in reducing demand to reduce demand. In the requesting, the electric power company acquires the supply and demand situations real time, and determines whether to correct incentives. In the case where incentives are corrected,
the electric power company sends incentive correction information to the controller of the customer. On the other hand, the customer sees the display of incentives for a reduction in demand at individual points in time on the screen, and takes an action of reducing demand of load devices.

Thirdly, the electric power company acquires an execution log when demand is reduced from the controller of the customer, and adjusts the electricity rate as the discount rate of incentives for the individual customers. Moreover, the electric power company evaluates the action of reducing demand from the execution log for the individual customers, and updates incentives for the individual customers.

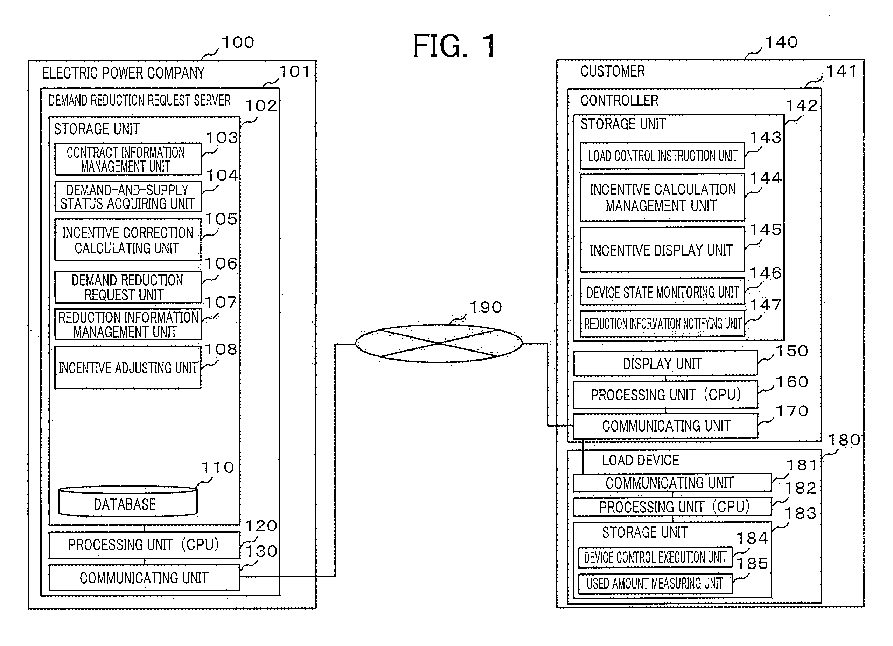

The configuration according to the embodiment of the present invention will be described with reference to the drawings. Fig. 1 is the configuration of the energy demand reduction system according to the embodiment. In this a block diagram, persons who carry out the operations according to the embodiment include an electric power company 100 that supplies energy and a customer 140 who uses energy or reduces the use of energy used at peak demand for supply. A single electric power company 100 and a single customer 140 are shown in the drawing. However, there may be a plurality of electric power companies 100 and a plurality of customers 140.

Moreover, devices held at the persons who carry out the operations according to the embodiment and the functions of the devices will be described. The electric power company 100 has a demand reduction request server 101 that processes the operations of requesting a reduction in demand, for example. The demand reduction request server 101 includes a storage unit 102, a processing unit (CPU) 120, and a communicating unit 130 that communicates with an external network. The storage unit 102 has a database 110 that efficiently manages data to be stored. Moreover, the storage unit 102 includes a contract information management unit 103 that manages contract information about customers who participate in reducing demand, a demand-and-supply status acquiring unit 104 that acquires the energy supply plan and demand and supply situations of the electric power company, an incentive correction calculating unit 105 that calculates an incentive correction value when changing a method for calculating preset incentives, a demand reduction request unit 106 that sends information to request a reduction in demand to the controller of the customer 141 when peak demand for supply is determined, a reduction information management unit 107 that collects the execution log of reducing demand after demand is reduced and updates incentive information using information about the actions of the customer included in the execution log, and an incentive adjusting unit 108 that adjusts the electricity rate based on the incentive information from the execution log of reducing demand.

Furthermore, a controller 141 installed on the compound or rooms, for example, of the customer 140 and a load device 180 that consumes energy are included. A plurality of the controllers 141 and a plurality of the load devices 180 may be provided. The controller 141 includes a storage unit 142, a display unit 150, a processing unit (CPU) 160, and a communicating unit 170 that communicates with the load device 180 or the demand reduction request server 101. The storage unit 142 includes a load control instruction unit 143 that automatically instructs a reduction in demand of the load device by a customer manipulation or by preset setting conditions when demand is reduced, an incentive calculation management unit 144 that calculates preset incentives or calculates incentives based on incentive correction information, an incentive display unit 145 that outputs and displays incentives for the individual load devices to the display unit 150 when demand is reduced, a device state monitoring unit 146 that determines the energy use situations of the load devices when demand is reduced, determines whether the connections of the load devices applied when the contract is made are changed, and determines whether the applied load devices are as applied when the contract is made, and a reduction information notifying unit 147 that sends the execution log of reducing demand to the demand reduction request server 101 after demand is reduced.

In addition, the load device 180 has a communicating unit 181 that is connected to the controller 141 and communicates with the controller 141, a processing unit (CPU) 182 that performs processes involved in reducing demand, and a storage unit 183 that stores functions involved in reducing demand. The storage unit 183 has a device control execution unit 184 that receives an instruction of reducing demand from the controller 180 and reduces energy consumption of the load, and a used amount measuring unit 185 that measures electric power consumed by the load device real time and notifies the consumed power to the controller 141. Moreover, the controller 141 is connected to the load device 180 via a LAN in a customer premises network. Furthermore, the demand reduction request server 101 is connected to the controller 141 via an external network 190, which is the Internet.

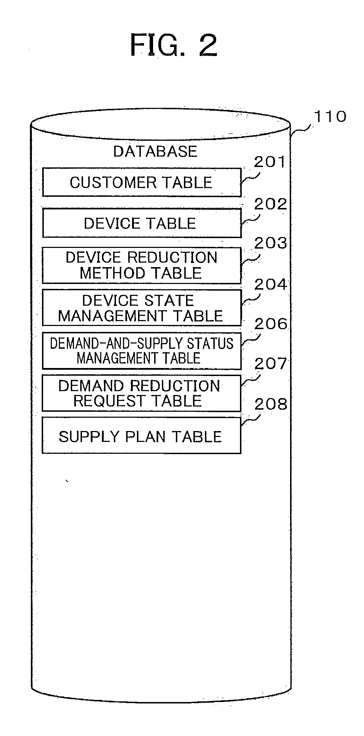

Fig. 2 is the structure of the database 110 that manages data for performing processes according to the embodiment by the demand reduction request server 101. The database 110 has a customer table 201 that stores contract information about the individual customers, a device table 202 that stores information about load devices held at the individual customers, a device reduction method table 203 that stores methods for reducing demand for the individual load devices held at the customer, a device state management table 204 that stores information about the electric power consumption performance of the load device and the reduction state of the load device at every time interval, a demand-and-supply status management table 206 that stores information about the amount supplied and the forecast amount of electric power demand real time with time, a demand reduction request table 207 that stores the history of requesting a reduction in demand, and a supply plan table 208 that stores information about the preset maximum amount of supply and the maximum possible amount of a reduction in demand. However, the configurations of the tables describe examples of the embodiment of the present invention, and the configurations may be changed as by adding or deleting tables for storing necessary data according to the operations for implementing DR.

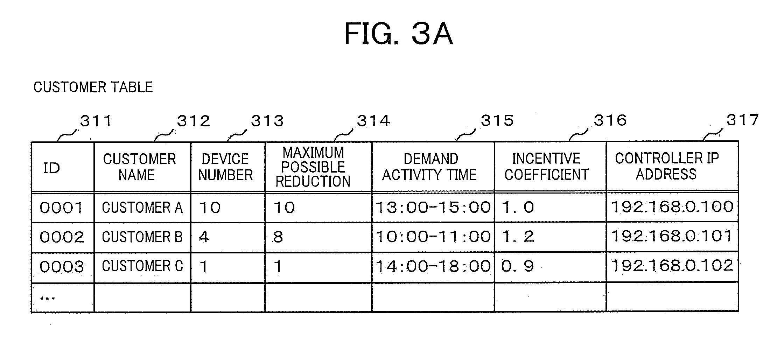

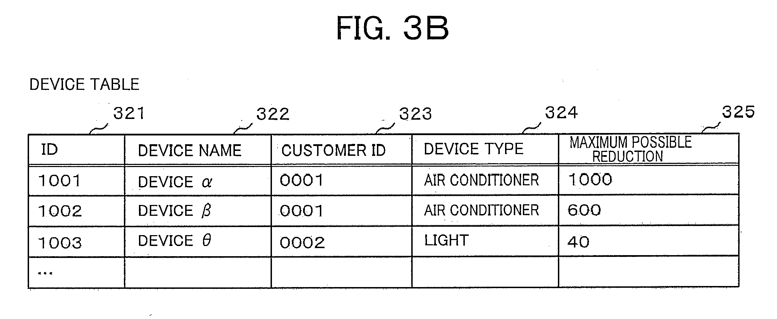

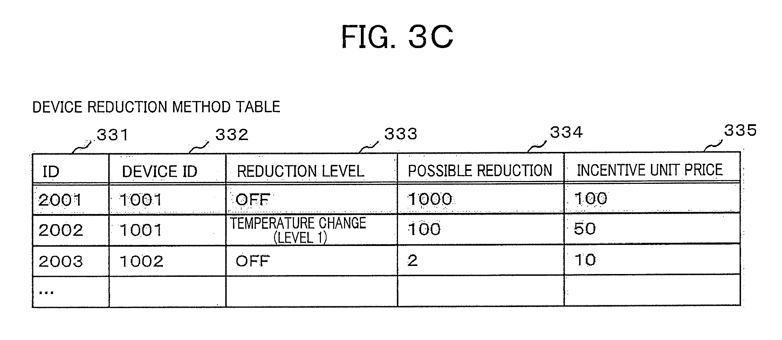

Figs. 3A to 3C are the table structures of the customer table 201 (Fig. 3A), the device table 202 (Fig. 3B), and the device reduction method table 203 (Fig. 3C). The customer table 201 is the list of information about customers who participate in reducing demand, showing information about a customer per record. The columns are formed of an ID 311 that uniquely identifies a customer, a customer name 312 that expresses information about a customer name, a device number 313 that stores the number of devices held at the customer, a maximum possible reduction (KW) 314 that stores the maximum possible reduction defined by a customer when demand is reduced, a demand activity time 315 that stores hours for which a customer consumes the maximum amount of electric power, an incentive coefficient 316 that expresses weighting of an incentive when demand is reduced defined by the action of reducing demand in the past, and a controller IP address 317 that expresses an IP address when communicating with the controller 141 held at a customer.

In the embodiment, it is assumed that a single item of information corresponds to a single customer in the columns. However, in the case where a plurality of items of information is stored in a single column as in the case where a single customer has a plurality of the controllers, a plurality of items of information can be stored by separating the items of information using ",". A plurality of items of information may be similarly stored also in a single column in the other tables.

The device table 202 expresses the list of information about load devices held at the individual customers, showing information about a single load device per record. The columns are formed of an ID 321 that uniquely identifies a single load device, a device name 322 that expresses a load device name, a customer ID 323 that is an external key for identifying a demand of the load device, a device type 324 that expresses a type of a load device, and a maximum possible reduction (W) 325 that expresses the maximum possible reduction in demand when the demand of a load device is reduced from the time at which the load device is used.

The device reduction method table 203 expresses the list of possible reductions by reduction methods for load devices held at the customer, showing information about a possible reduction for a single reduction method per record. The columns are formed of an ID 331 that uniquely identifies the reduction methods for the individual load devices, a device ID 332 that expresses the external ID of a load device relevant to the device table 202, a reduction level 333 that expresses the reduction method for the load device, a possible reduction (W) 334 that expresses the maximum amount of a reduction which can be reduced by the reduction methods for the individual load devices, and an incentive unit price 335 that is a base incentive returned by the reduction method.

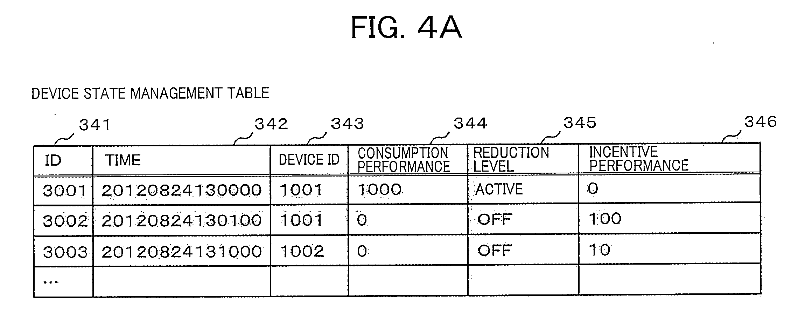

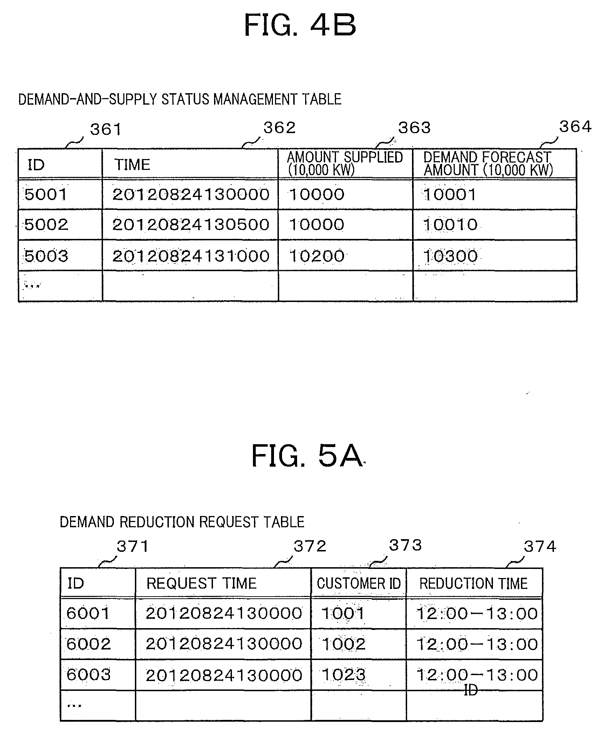

Figs. 4A and 4B are the table structures of the device state management table 204 (Fig. 4A) and the demand-and-supply status management table 206 (Fig. 4B). The device state management table 204 expresses the states of the load devices held at the customer in a time series, showing information about the state of a load device at one time of day per record. The columns are formed of an ID 341 that uniquely identifies the states of the individual load devices in a time series, time 342, a device ID 343 that expresses the external ID of a load device relevant to the device table 202, a consumption performance (KW) 344 that expresses the electric power consumption performance of the load device at the relevant time, a reduction level 345 that expresses the state of the load device at the relevant time, and an incentive performance 346 that expresses an incentive money amount when demand is reduced.

The demand-and-supply status management table 206 expresses the performance of the electric power company supplying the amount of energy real time in a time series and information about demand forecast, showing information at one time of day per record. The columns are formed of an ID 361 that uniquely identifies information about demand and supply situations at one time of day in a time series, time 362, an amount supplied (10,000 KW) 363 that expresses the amount supplied, and a demand forecast amount (10,000 KW) 364 based on demand forecast.

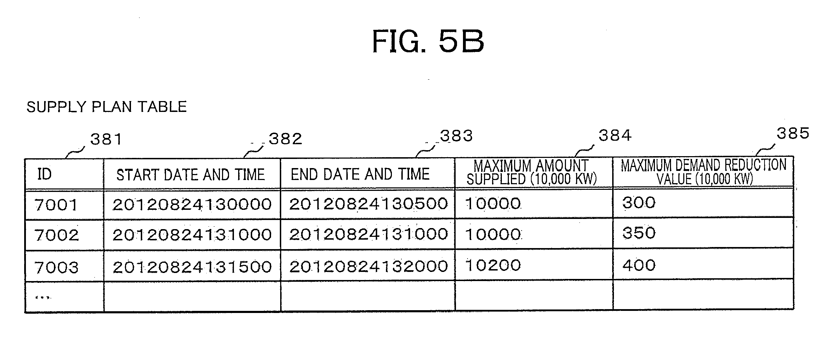

Figs. 5A and 5B are the table structures of the demand reduction request table 207 (Fig. 5A) and the supply plan table 208 (Fig. 5B). The device state management table 207 expresses information about the performance of the electric power company making a request for reducing demand at peak demand for supply, showing a demand reduction request for the individual customers at one time of day per record. The columns are formed of an ID 371 that uniquely identifies the performance of requesting a reduction in demand in a time series, request time 372 that expresses the time at which a request is made, a customer ID 373 that expresses the external ID of the customer relevant to the table 201, and reduction time 374 that expresses the time range of a relevant reduction in demand.

The supply plan table 208 expresses information about a supply plan of the electric power company for managing the amount of power supplied and the situations of the maximum value for a reduction in demand assumed at peak demand for supply, showing a supply plan for one time range per record. The columns are formed of an ID 381 that uniquely identifies a supply plan in a certain time range, a start date and time 382 in the time range for the supply plan, an end date and time 383, a maximum possible amount supplied 384 that expresses the maximum possible amount of supply in the time range of the start date and time 382 to the end date and time 383, and a maximum demand reduction value 385 that expresses the maximum value of the amount of a reduction in demand which does not affect stable energy supply when demand is reduced.

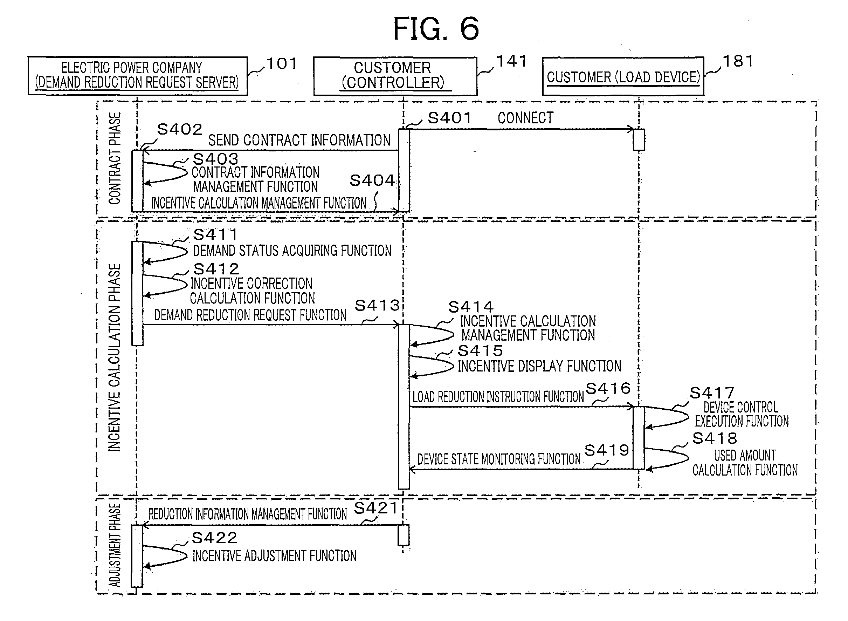

Fig. 6 is the overall process sequence of DR according to the embodiment. In the embodiment, the sequence is separated into a first phase in which a contract is made, a second incentive calculation phase in which an incentive is calculated and demand is reduced, and a third adjustment phase in which an incentive is returned to customer after demand is reduced.

In the first contract phase, the following flow is performed. The electric power company makes a contract with the customer for a plan in which the customer is requested to reduce demand at peak demand for supply and an incentive for the reduction is returned. In the contract phase, the customer manipulates the held controller 141 to connect the load device 181 for reducing demand via the LAN (S401). Subsequently, in response to the manipulation from the customer, the controller 141 or a personal computer starts a browser, makes access to a Web page released on the demand reduction request server 101 of the electric power company, and sends contract information for participating in the demand reduction plan, information about load devices, and information about a method for reducing the demand of the individual load devices and the amount of a reduction (S402).

Subsequently, the demand reduction request server 101 calls the contract information management unit 103, and the processing unit (CPU) 120 performs a program that implements a function (a contract information management function) of the contract information management unit 103 (S403). More specifically, the program for the contract information management unit 103 acquires contract information from the customer including a customer name, the number (the device number) of load devices to reduce demand for making a contract, the total amount of a reduction in demand of the load devices when demand is reduced, active hours for which the maximum amount of electric power is used, and information about the IP address of the controller 141 at which a demand reduction request is received. When the contract information management unit 103 acquires contract information about the customer, the contract information management unit 103 stores the acquired contract information about the customer on the customer table 201 in the database 110. The contract information management unit 103 numbers IDs by serial numbers as "0001", and stores the values on the ID 311, the received customer name, "customer A", on the customer name 312, the number of the load devices (the device number), "10", on the device number 313, the amount of a reduction in demand, "10", on the maximum possible reduction (KW) 314, the value, "13:00 to 15:00", of active hours for which the maximum amount of electric power is used on the demand activity time 315, and the IP address, "192.168.0.100", of the controller 141 on the controller IP address 317.

Moreover, in S403, the contract information management unit 103 stores the initial value, "1.0", on the incentive coefficient 316 for the value to dynamically vary incentives by weighting to return incentives depending on the customers. Furthermore, the contract information management unit 103 receives contract information from the controller 141 when sending contract information (S402), and receives information about load devices. The contract information management unit 103 stores the information about load devices on the device table 202, in which the contract information management unit 103 numbers IDs for the received individual load devices, stores "1001" on the ID 321, stores the device name, "device α", on the device name, searches the customer table using the source IP address, "192.168.0.100", of the controller that sends the information about load devices as a key to acquire the value, "0001", of the ID 311 of the customer table 201, and stores the value, "0001", of the customer ID on the customer ID 323. In the case where type information about the received load device is an air conditioner, the contract information management unit 103 stores the value, "air conditioner", on the device type 324, and stores the possible reduction, "1,000", preset individually for the sent load devices on the maximum possible reduction (W) 325.

In addition, in S403, the contract information management unit 103 receives information about a method for reducing the demand of the individual load devices and the amount of a reduction, and stores the information on the device reduction method table 203. The contract information management unit 103 stores the information about the method for reducing the demand of the individual load devices on the device reduction method table 203, in which the contract information management unit 103 numbers IDs for the received reduction methods for the load devices, stores "2001" on the ID 331, searches the device table 202 for the relevant device ID, and stores the ID, "1001", for the relevant the device on the device ID 332, stores the value, "OFF", which is the method for reducing demand defined for the individual load devices in the embodiment, on the reduction level 333, and stores the amount of a reduction in demand when the method for reducing demand is performed on the possible reduction (W) 334. Moreover, in response to the manipulation by the DR administrator of the electric power company 100 through an input interface such as the browser, the contract information management unit 103 receives the base money amount of an incentive to be returned to the customer based on the load device and the amount of a reduction reduced individually for the reduction methods. The contract information management unit 103 then stores "100" on the incentive unit price 335 on the record matched with the relevant device and the reduction level on the device reduction method table 203 (S403). The contract information management unit 103 repeats the process for the number of records for the relevant devices and the reduction levels.

Subsequently, in order to enable the controller 141 and the demand reduction request server 101 to handle the same data, the contract information management unit 103 sends data to the controller 141 via the external network 190 after completion of storing the data on the database 110. In the case where data is changed, items of data on both sides are updated in order to maintain the consistency between items of data on both sides.

Subsequently, a preset program that calculates incentives using a correlation model with demand (a program that implements an incentive calculation management function) is sent. The incentive calculation management unit 144 of the controller 140 stores the program that calculates incentives received through the communicating unit 170 on the storage unit 142. Moreover, at the same time, only information about the relevant customer is sent, which is data about incentive calculations stored on the database 110 of the demand reduction request server 101 in the contract phase, and stored on the storage unit 183 of the controller 141 (S404). The program that calculates incentives using the correlation model with demand described in the embodiment is the logic that determines incentives according to the temperature. More specifically, incentives are varied according to time and the temperature at that point in time based on weather information set at the demand reduction request server 101. For example, in the case where the temperature is at a temperature of 30°C in the summer season, the incentive coefficient is set to 1.0, in the case where the temperature is at a temperature of 31°C, the coefficient is set to 1.1, and in the case where the temperature is much higher at a temperature of 37°C, the coefficient is set to 1.7, which is a numeric value greater than the case where the temperature is at a temperature of 31°C.

Subsequently, the second incentive calculation phase will be described. In the second incentive calculation phase, the following flow is performed. In the electric power company 100, in order to grasp the supply and demand situations of electric power, the demand-and-supply status acquiring unit 104 of the demand reduction request server 101 accepts the input of the supply plan and the demand and supply situations, and stores these items of information (S411). A person in charge in the electric power company 100 inputs the supply plan to register the sum total of the amount supplied by supply facilities to be operated on the relevant date and time and the maximum demand reduction value for individual time intervals in consideration of the stability of electric power supply such as a reverse power flow when demand is reduced at peak demand for supply. More specifically, as illustrated in Fig. 5B, the maximum possible amount supplied, "100,00"0,000 KW, from time "8/24/2012 13:00:00" to time "8/24/2012 13:05:00" is stored, and "300" KW, which is the tolerance of the maximum demand reduction that electric power can be stably supplied even though demand is suddenly reduced when demand is reduced,
on the maximum demand reduction value (KW) 385 per record as a supply plan.

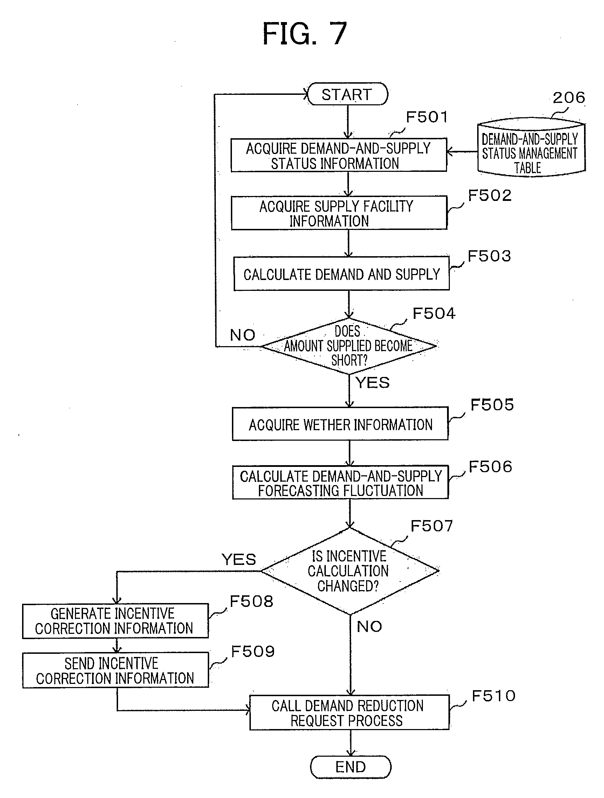

Fig. 7 is a flowchart of a detailed process flow of a process in which the demand-and-supply status acquiring unit 104 performs a program that acquires the demand and supply situations (a program that implements the demand-and-supply situation acquiring function) (S411), a process of the incentive correction calculating unit 105 (S412), and a process in which the demand reduction request unit 106 performs a program that implements these functions (S413).

As illustrated in Fig. 7, in the process of acquiring the demand and supply situations (F501), the demand-and-supply status acquiring unit 104 acquires the value, which is the amount supplied (10,000 KW) at a point in time from the supply facility operated by the electric power company 100 using a measuring device and stored on the demand-and-supply status management table 206. The columns and the values stored on the demand-and-supply status management table 206 are ID "5001" numbered for identifying a record to identify the demand and supply situations on the ID 361, "20120824130000", which is the value, 8/24/2012 13:00:00, at which the demand and supply situations are acquired, on the time 362, and the value of the amount supplied, "10,000", which is measured by a measuring device to measure the demand and supply situations real time, on the amount supplied (10,000 KW) 363. Moreover, demand is forecast using statistic information, for example, expressing electric power demand performances in the past, and the value of the demand forecast amount, "10,001", is stored on the demand forecast amount (10,000 KW) 364.

Subsequently, the demand-and-supply status acquiring unit 104 acquires supply facility information in the process of acquiring supply facility information (F502). The supply facility information is received, including information expressing that the supply facility of the electric power company 100 normally operates, "the operating state is normal", for example, and information expressing that an additional electric power supply can be accepted from suppliers such as other electric power companies in an emergency, the value, "emergency interchange power of 00,000 KW", for example.

Subsequently, the demand-and-supply status acquiring unit 104 determines whether peak demand for supply will be taken place in the process of calculating demand and supply (F503). In the process of determination, the following information is acquired: the value, "10,000", of the amount supplied 363 stored on 8/24/2012 13:00:00, which is information about demand and supply situations acquired in F501; the demand forecast amount, "10,001"; "the operating state is normal", on the supply facility according to the information about the supply facility acquired in F502; and information about "emergency interchange power of 00,000 KW" related to a change in the amount supplied. Thus, the amount supplied is not changed because of the normal operating state of the supply facility, and the amount supplied is not changed because of an additional electric power of 00,000 KW, so that it is calculated that the amount supplied is "10,000" and the demand forecast amount is "10,001".

Subsequently, the demand-and-supply status acquiring unit 104 determines that peak demand for supply will be taken place because the demand forecast amount, "10,001", becomes greater than the amount supplied, "10,000", in the process of branching determination (F504). When it is determined as a short supply, the process goes to the process of acquiring weather information (F505). In the case where it is determined that the amount supplied is greater than the demand forecast amount to be a short supply, the process returns to step S411 to repeat the processes. In other words, the demand and supply situations are always acquired to make a determination whether supply is short.

Moreover, determination whether supply is short is made by a difference between the amount supplied and the demand forecast amount in determination whether to be a shortage of the amount supplied. However, for another element of stably implementing electric power supply, "a reserve" may be included, which a certain amount supplied is secured greater than the demand forecast amount. For example, when the amount supplied from the supply facility is "10,000" and a reserve is at "10%" of the amount supplied, the demand-and-supply status acquiring unit 104 determines whether supply is short based on the amount supplied, "11,000", to be secured.

Subsequently, when the demand-and-supply status acquiring unit 104 determines that supply is short, the incentive correction calculating unit 105 performs the following process in the overall process sequence (S412) illustrated in Fig. 6: the process of acquiring weather information (F505); the process of calculating demand and supply forecast fluctuations (F506); the process of branching a change in incentive calculation (F507); the process of generating incentive correction information (F508); and the process of sending incentive correction information (F509) in Fig. 7.

More specifically, the incentive correction calculating unit 105 calls a service on the Internet to provide weather information in the process of acquiring weather information (F505). For example, a day to perform a reduction in demand is specified as "Date = 20120824" on the Web service provided by the weather information site, and temperature information on that day is acquired as return values, "13:00 = 35°C = fair", "14:00 = 36°C = cloudy", "15:00 = 36°C = fair", and "16:00 = 28°C = rainy".

Subsequently, the incentive correction calculating unit 105 performs the process of calculating demand and supply forecast fluctuations (F506). In F506, when requesting a demand reduction this time, the calculation process is performed to determine whether the logic is as the logic of the program that calculates incentives preset on the controller 141. The content of the process for calculation is that based on the previous temperature information, a change in the temperature for one hour is zero from the values "14:00 = 36°C = cloudy" and "15:00 = 36°C = fair", and the weather is changed from cloudy to fair weathers, so that it is assumed that the use of air conditioners is not changed but lights are not lit, and it is forecast that the use of lights is suddenly reduced and demand is reduced.

The incentive correction calculating unit 105 forecasts that demand is suddenly reduced at the branch whether incentive calculation is changed (F507), determines that calculation is changed from the logic of incentive calculation based on the temperature, and goes to the process of generating incentive correction information (F508). On the other hand, in the case where demand forecast is not changed and the logic is not changed from the logic of the program involved in incentive calculation preset on the controller 141, the process goes to the process performed at the demand reduction request unit 106 (S413) in the overall process sequence in Fig. 6.

Subsequently, in the process of generating incentive correction information (F508), the incentive correction calculating unit 105 performs the process of generating correction values for incentive calculation. More specifically, in the case where the temperature in the summer season is at a temperature of 30°C and the weather is fair, the incentive coefficient is set to 1.0, in the case where the weather is cloudy or rainy at a temperature of 30°C, the coefficient is set to 1.1, in the case where the weather is fair at a temperature of 31°C, the coefficient is set to 1.1, and in the case where the weather is cloudy or rainy at a temperature of 31°C, the coefficient is set to 1.2. Moreover, in the case where the weather is fair at a temperature of 37°C, the coefficient is set to 1.7, and in the case where the weather is cloudy or rainy at a temperature of 37°C, the coefficient is set to 1.8. Furthermore, the time interval for the process of calculating incentives according to the embodiment is set to five minutes. The temperature is to be acquired at every five minutes, and the incentive coefficients are to be updated based on the value.

Subsequently, the demand reduction request server 101 sends information about the incentive correction values generated in the process of sending incentive correction information (F509) to the controller 140. When transmission is completed, the demand reduction request server 101 receives an acknowledge from the controller 140 that the registration of the logic of incentive calculation is completed.

Subsequently, in the process performed at the demand reduction request unit 107 (S413) in the overall process sequence in Fig. 6, a demand request signal is sent to the controller 141. The content of the process is that the demand reduction request unit 107 calls and performs the demand reduction request process (F510) in the flowchart in Fig. 7. In calling the demand reduction process, the demand reduction request unit 107 selects a target customer, and holds the ID of the relevant customer in a list. Based on the customer ID, the time range in which demand is reduced is specified as "12:00 to 13:00" for the individual customers. Moreover, the demand reduction request unit 107 searches the customer table 201 for the relevant IP address of the controller 141 using the customer ID as a key, and acquires the IP address. In the case where the customer ID is "0001", the controller IP address, "192.168.0.100", can be acquired. The demand reduction request unit 107 repeats this process to generate the list of the IP address. The demand reduction request unit 107 sends "a demand reduction request signal: 12:00 to 13:00" that is a message of requesting a reduction in demand to the relevant controller.

After that, in order to express the demand reduction performance on the demand reduction request table 206, the demand reduction request unit 107 numbers and stores the ID, "6001", for identifying a certain reduction in demand on the ID 371, the value, "20120824130000", expressing the request time on the request time 372, the relevant customer ID, "1001", on the customer ID 373, and an hour for reduction, "12:00 to 13:00", on the reduction time 374.

As described above, the demand reduction request process based on the demand and supply situations in Fig. 7 is completed. However, target customers in the embodiment include all the customers who make a contract. However, targets may be determined based on modes of business operations such as customers having a base in a certain area or factories and information such as values that are values of possible demand reductions through held load devices. In the determination, information about customer bases and modes of business operations, for example, are to be registered on the customer table 201 by expanding the columns in the contract phase.

Subsequently, the process is described with reference to the overall process sequence in Fig. 6 in which the controller 141 receives the reduction demand request signal to reduce the demand of the load device. The order of process flow for implementation is as follows: a process performed at the incentive calculation management unit 108 that receives a reduction demand request signal and calculates incentives corresponding to the received demand reduction request (S414), a process performed at the incentive display unit 145 in which the controller 141 outputs the calculated incentives on the screen of the display unit 150 (S415), a process performed at the load control instruction unit 143 that accepts a selection of a reduction method outputted on the screen of the customer 140 or sends an instruction to reduce the demand of the relevant load device by a process preset on the controller 140 (S416), a process performed at the device control execution unit 184 that receives the instruction and reduces the demand of the load device (S417), and a process performed at the used amount measuring unit 185 that measures the used amount of energy being consumed (S418). Moreover, the process flow includes a process performed at the device state monitoring unit 146 in which the load device 181 asynchronously sends the amount of energy used of the load device and the state of the load device to the controller 141 real time (S419).

In the process performed at the incentive calculation management unit 144 (S414), an incentive is calculated with correction values used in calculation from the logic of calculating the incentive based on the preset temperature to the logic of calculation based on the temperature and the weather. For more specific content of the process, the controller 414 acquires the values of temperature information, "35°C", and weather information "fair" from weather information provided via the external network and information about the list of the connected load devices, which are stored on the storage unit 183 of the controller 141. In the case where the load device 181 of the device ID, "1001", which is an air conditioner, is installed on the customer 140 and the reduction method is turning off the air conditioner, the incentive for the relevant load device can be found by the following equation.

The incentive money amount is found in which a product is calculated as the value "100 yen" by multiplying the incentive coefficient, "1.0", using the correlation model with "100" for the incentive unit price 335 at the reduction level "OFF" by the value, "1.0", on the incentive coefficient 316 for the individual customers are multiplied. The calculation of the incentive is repeatedly performed for the number of times, which is the value of the device number 313 of the number of the contracted load devices connected to the controller in the contract. Subsequently, in the process performed at the incentive display unit 145 (S415), the calculated incentive is displayed on the screen 150. The screen 150 will be described later.

Subsequently, in the process performed at the load control instruction unit 143 (S416), the customer confirms the incentive displayed on the screen 150, and touches the screen of an item number 704 to call a selection. The demand of the selected relevant device is reduced via the LAN. In the embodiment, since the method is the demand reduction method that turns off the demand of air conditioner A, a message signal, "air conditioner A = OFF", is instructed to the relevant load device.

Subsequently, in the process performed at the device control execution unit 184 (S417), the load device is controlled based on the received message signal. When the relevant load device receives the message, "air conditioner A = OFF", the processing unit (CPU) 182 of the load device 181 executes the command that turns off the power supply of the load device, "air conditioner A". Subsequently, in the process performed at the used amount measuring unit 185 (S418), the amount of electric power used at the load device 181 is measured. In the embodiment, the amount of power consumption is measured using an internal sensor at the load device 180 at one-minute intervals, and the value is stored on the storage unit 183 as "100 = active" and "0 = OFF", in the format, "used amount = device state".

Subsequently, in the process performed at the device state monitoring unit 146 (S419), information about the amount of electric power used is acquired, which is always measured and stored on the storage unit 183 of the load device 180. In the acquisition, the device state monitoring unit 146 gives time information, the incentive, and device information to information about the acquired amount of electric power used, and generates a message such as "20120824125900 = 1,000 = active = 0 = 1001" and "20120824130000 = 0 = OFF = 100 = 1001", in the format, "time = used amount = device state = incentive money amount = relevant device ID". The time is acquired from the time held on the controller 142, and the relevant device ID is acquired from data of the connected load device held on the storage unit 143 of the controller 142. In the embodiment, the incentive coefficient using the correlation model is set to 1.0, the value of the incentive coefficient 316 set for the individual customers is 1.0, and the incentive money amount is 100 yen.

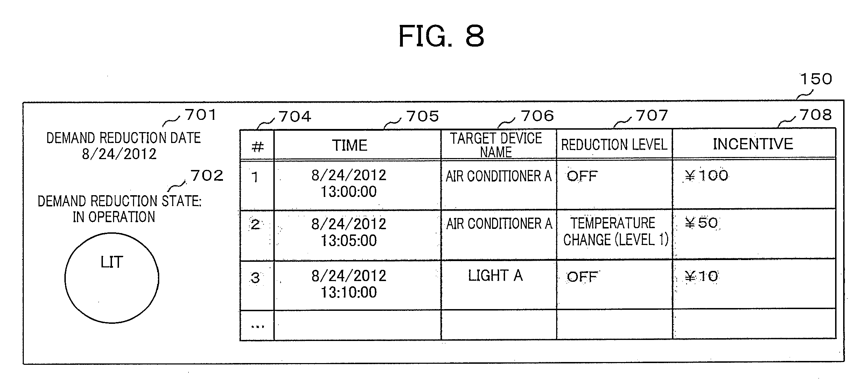

The screen 150 that displays incentives will be described with reference to Fig. 8. The controller 141 is installed in the premises of the customer 140, and the display unit is displayed on a display such as a television set, personal computer, and dedicated touch panel display. The following is displayed on the screen 150: "2012/08/24" on a demand reduction date 701 that expresses the date for the day when demand is reduced; "in operation" on a demand reduction state 702 that expresses whether a demand reduction request is received; "red" is lit on a light 703 on which a red light is displayed when demand is reduced; "1" on the item number 704 that expresses the list number on the table of the list of the target load devices; "8/14/2012 13:00:00" on time 705 at which demand is reduced; "air conditioner" on a target device name 706 that expresses a target device name; "OFF" on a reduction level 707 that expresses a reduction method for the device; and an incentive 708 that expresses an incentive corresponding to the relevant load device and the reduction method. In the case where there are a plurality of load devices and a plurality of reduction methods, they are displayed on a postscript list. The incentive is determined according to the logic again calculated at five-minute intervals. The controller 142 again displays updated incentive values.

Subsequently, the third adjustment phase will be described. In the third adjustment phase, the following flow is performed. In the process performed at the reduction information management unit 107 of the demand reduction request server 101 (S421), the measured amount of electric power used and the demand reducing action performance of the customer 140 are acquired, and a feedback process of varying the incentive coefficient is performed based on the acquired data. In the process performed at the incentive adjusting unit 108 (S422), the process of discounting the incentive from the electricity rate is performed.

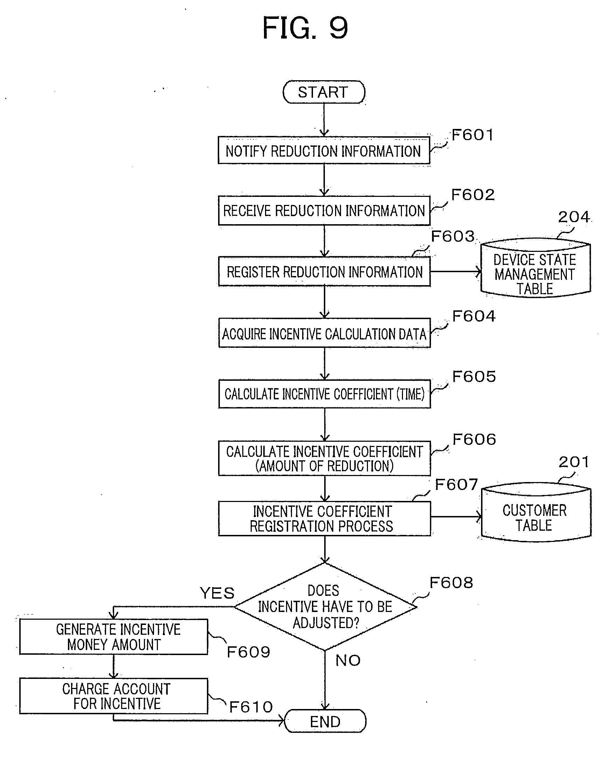

Fig. 9 is a flowchart of the detailed flow of the processes. In the process performed at the reduction information management unit 107 (S421), the processes are performed in order of F601, F602, F603, F604, F605, F606, and F607. Moreover, in the process performed at the incentive adjusting unit 108 (S422), the processes are performed in order of F608 and F609. In the following, the detail of the processes is shown.

First, the reduction information notifying unit 147 of the controller 140 notifies the information about the amount of electric power used, which is acquired from the load device 180, to the demand reduction request server 101 in the message, "20120824125900 = 1,000 = active = 0= 1001" and "20120824130000 = 0 = OFF = 100 = 1001", in the format, "time = used amount = device state = incentive = relevant device ID" (F601). In the notification, a plurality of messages on information about the amount of electric power used may be collectively sent. For example, it may be fine that in the case of a plurality of messages, the messages are sent at different times, and in the case where the used amount, the device state, the incentive, and the relevant device ID are the same, the messages are wrapped in separation using "," for reducing the information volume as "20120830130000, 20120830130100 = 1,000 = active = 0 = 1001", in the format, "time 1, time 2 = used amount = device state = incentive = relevant device ID".

Subsequently, the reduction information management unit 107 of the demand reduction request server 101 receives the message of the information about the amount of electric power used, which is sent from the controller (F602). Subsequently, the reduction information management unit 107 parses the information about the amount of electric power used, which is received in individual time series, and registers the information on the device state management table 204 of the database 110. The following is stored on the device state management table 204, in which the ID, "3001", is numbered and stored on the ID 341, "20120824130000", which is the measured time, on the time 342, the device ID "1001" that expresses the relevant load device on the device ID 343, "1,000", that expresses the performance of the acquired used amount on the consumption performance (KW) 344, "active", which is a reduction method at this time, on the reduction level 345, and "0" that expresses the incentive money amount when demand is reduced on the incentive money amount 355. Moreover, in the case where a reduction is not requested, "-" is stored, expressing that the load device is still connected and the action of reducing demand is not taken on the reduction level 345 as information about the state whether the load device is connected (F603).

Subsequently, the reduction information management unit 107 of the demand reduction request server 101 performs the feedback process of varying the incentive coefficient based on a time period for which the demand reduction request is requested to the customer and the customer reduces demand and the amount of demand of the load device reduced. Subsequently, the reduction information management unit 107 acquires the relevant record to which the process of varying the incentive coefficient is applied. In the embodiment, calculation is to be made on the relevant record based on a record in a single time interval. In the embodiment, an example is shown in which a reduction in demand is requested on "08/24/2012 13:00:00", the customer takes the action of reducing demand on "08/24/2012 13:01:00", and the process of varying the incentive coefficient is performed on 08/24/2012 13:00:00. First, the reduction information management unit 107 specifies 20120824130000 as the specified time for the request time 372 from the demand reduction request table 207 in order to acquire the performance of a demand reduction request, and acquires the relevant record.

Subsequently, the reduction information management unit 107 acquires the relevant records from 20120824130000" to "20120824140000" as a specified condition in a single time range in the time 342 on the device state management table (F604). In the embodiment, the process of varying the incentive coefficient for a single customer is shown, and the information about the time period taken until demand is reduced and the amount of a reduction in demand are also acquired for the other customers participating in reducing demand.

Subsequently, the reduction information management unit 107 evaluates incentive calculation based on the length of the time period taken until demand is reduced. When the time, "20120824130100", is subtracted from the time in F604, "20120824130000", the value, "one minute", is calculated for a time period taken until demand is reduced on a single device. The time, "20120824130100", is the execution time of reducing demand on the customer on the record on which the reduction level 345 is "inactive" and the minimum time on the time 342 on the device ID 343, and the time, "20120824130000", is acquired as the time at which a reduction in demand is requested. In the case where a single customer holds a plurality of devices, the devices are individually calculated, and the mean value is found. For example, in the case where the device ID = 1001 takes one minute and the device ID = 1002 takes ten minutes, the mean value is "5.5 minutes". The time period taken until demand is reduced is arranged in units of minutes for the individual customers as "customer ID 0001 = 5.5, customer ID 0003 = 1, customer ID 0010 = 3, customer ID 0031 = 5", and so on. In the case where there are 100 customers participating in reducing demand, the incentive coefficient is increased 10% as favorably evaluated for 50 customers in the upper half. The incentive coefficient is "1.1" for the customer whose incentive coefficient is "1.0". Moreover, the incentive coefficient is fed back in such a way that the incentive coefficient is decreased 10% as not favorably evaluated for 50 customers in the lower half (F605).

Subsequently, the reduction information management unit 107 evaluates incentive calculation according to the sizes of the performed amount of a reduction. Similarly in F605, the relevant record on which the reduction level 345 is "inactive" is acquired among the records from "20120824130000" to "20120824140000" as a specified condition in a single time range in the time 342 on the device state management table. The amount of a reduction is calculated, which is performed at the reduction level for the individual device IDs on the relevant records. For example, in the case where the device ID = 1001 and the reduction level = OFF, the device reduction method table 203 is searched under the conditions above, and the amount of a reduction can be acquired as "1,000" from the possible reduction (W) 334. In the case where a single customer holds a plurality of devices, the devices are individually calculated, and the amount is individually calculated and the added value is found. The sizes of the amount of a reduction are calculated for the individual customers, and the customers are sorted according to the sizes of the executed amount of a reduction as "customer ID 0001 = 1100, customer ID 0002 = 2, customer ID 0005 = 30, customer ID 0030 = 100", and so on. Similarly, for the relevant customers, the incentive coefficient is increased 10% as favorably evaluated for 50 customers in the upper half in order of the amount of a reduction. The customer whose incentive coefficient is "1.0" is "1.1". Moreover, the incentive coefficient is decreased 10% as not favorably evaluated for 50 customers in the lower half (F606).

Subsequently, the reduction information management unit 107 adds the values of the incentive coefficients calculated in F605 and F606, updates the values on the incentive coefficient 315 on the records of the relevant customers on the customer table 201, and evaluates and feeds back a reduction in demand (F607).

Subsequently, in performing the incentive coefficient calculation (F605 and F606), incentives are not returned to a customer who does not reduce demand or a customer who has no reduction in demand in the process performed at the incentive adjusting unit 108 (S422). Therefore, the process of branching whether it is necessary to adjust incentives is performed. In the embodiment, the time at which demand is reduced and the amount of a reduction are determined by the following equation. In the case where A < = 0 and B < = 0, the incentive adjustment process is not performed, where A is the execution time for a reduction in demand at the customer and B is the amount of a reduction. In this case, the process is ended (F608).

Subsequently, in the case where incentives are adjusted by the branching process, in the process performed at the incentive adjusting unit 108 (S422), the following process is performed: the process of calculating the incentive money amount (F609) and the process of discounting an incentive from the electricity rate for charging the payment on the account (F610). In the embodiment, the case is shown where the incentive for the customer ID "0001" is "100". For example, suppose that the incentive "1" is "one-yen discount" and the electricity rate is 10,000 yen in August in 2010, the discount is "10,000-100 yen", and the electricity rate is calculated as "9,900 yen" (F609). Subsequently, in the contract between the electric power company and the customer, the electricity rate "9900 yen" is notified to the account on which the electricity rate is charged (F610). After that, the process is ended.

Lastly, the first contract phase is performed every time when a customer is increased to make a contract, and the second incentive calculation phase and the third adjustment phase are performed every time when peak demand for supply is detected. Thus, in DR in which the customer reduces energy demand at peak demand for energy supply, the incentive money amount is determined in an early stage, and the phases are repeated and implemented, so that the leveling of the load on electric power is implemented. As described above, the processes of DR according to the embodiment of the present invention is completed.

In the embodiment, since the processes are performed as described above, in solving peak demand for energy supply, in consideration of the demand and supply situations and the customer situations in demand reduction, for example, as matched with the demand and supply situations at peak demand for supply, an appropriate incentive (a reward) to the effect of reducing demand is determined and presented to the customer before taking the action of reducing demand, so that it is possible to control the amount of a reduction in demand.

For example, for the solution to the first problem, when requesting a reduction, the amount of a reduction in demand is defined in the case where the control command of reducing demand of the load device is performed for every preset time. When demand is reduced, the controller always acquires the control command to the load device and the demand reduction performance of the load device, determines that demand is reduced, and calculates and determines incentives real time based on the incentive unit price. Moreover, the display function included in the controller or the display device connected to the controller includes the function of displaying incentive information for the individual load devices at the customer in the case where demand is reduced, and presents incentive information when requesting a reduction in demand before the customer takes the action of reducing demand. Thus, the customer can take the action of reducing demand after grasping incentives, so that incentives can be determined in an early stage without determining whether power consumption does not exceed the power consumption reduction level through the specified period, which is the first problem.

Furthermore, for the solution to the second problem, the controller sends data such as the number of the load devices at the customer targeted for reducing demand and the activity time of the customer to the demand reduction request server, and the demand reduction request server sets weights of incentives for the individual customers and the individual load devices based on the data. In addition, the controller accumulates performance logs for reduction by customer manual operations or by automatic control by the controller, sends information about time at which demand is reduced and the amount of a reduction to the demand reduction request server of the supplier or the aggregator, and updates incentive values set to the individual customers. For an example of the update process for the incentives set to the individual customers, the process is performed in which data for increasing weighting vales and incentive values is calculated in such a way that a large amount of an incentive is returned to a customer who reduces demand in an early stage and a customer whose amount of a reduction in demand is large. In the process, in calculating an incentive (a reward), in addition to the amount of a reduction in demand and the returned incentive unit price, the value added with incentive coefficients weighted for the individual customers is calculated as an incentive (a reward). Thus, it is possible to reflect fairness of the value of the amount of electric power reduced and the value of a reduction in demand for the individual customers, not based on the degree of achievement in a reduction in power consumption, which is a uniform reference value.

Moreover, for the solution to the third problem, the demand reduction request server provides a unit that acquires the demand and supply situations and calculates an incentive by the logic of dynamically changing the incentive according to the demand and supply situations when the amount of demand is greater than the amount supplied. For the process, a program is performed for acquiring a supply plan for certain periods such as a minute, hour, day, and month for which the energy supply facility supplies energy. Furthermore, the controller is connected to the demand reduction request server at the supplier via the external network such as the Internet outside a building and a residence, and includes the function of transmitting the energy use situations to the demand reduction request server real time. In addition, in the case where the demand reduction request server detects that the amount of demand will exceed the amount of energy supplied defined on the supply plan by forecast, the demand reduction request server notifies the demand reduction request to the customer or the aggregator. In the notification, a unit that dynamically sets incentives is provided. For the unit that dynamically sets incentives, a unit is provided in which the unit acquires information about the amount of short supply in the demand and supply situations always provided from the energy supplier, the unit sets varied incentives as by allocating the total expense in the case where the amount of short supply is covered by different energy, the unit acquires the date on which air conditioners, whose energy demand is relatively large, tend to operate such as the hottest date on which the demand preset on the controller is at the peak and the coldest date from statistical information in the past, and the unit dynamically sets incentive unit prices as matched with the situations. For the situations of dynamically setting incentives, the following case is assumed, for example: the case where the supplier can provide the amount supplied smaller than the amount assumed because of the failure of the supply facility, the case where demand for supply is still at a peak even though a reduction in demand is secured which is assumed based on the correlation of a demand tendency, the case where a large number of participant customers gather in a location at which an event is held and the amount of demand is suddenly increased, and the case where many customers act differently from the demand schedules of the customers registered in advance in the contract phase and it is difficult to secure the amount of a reduction in demand.

Moreover, for the solution to the fourth problem, in order to reduce the occurrence of process loads and network loads (congestion) between the electric power company and the customers because the amount of calculation becomes enormous, incentives are dynamically calculated at the controller on the customer side using the correlation model with demand such as "the temperature" when demand is reduced, and the amount of calculation and the network loads are reduced. Furthermore, in the case where the incentives are changed using the correlation model depending on the demand and supply situations, only the correction value is sent to reduce a data processing volume. In the case where incentives are calculated according to the logic different in the correlation of the tendency of demand and supply from the program that calculates incentives based on the correlation model of the tendency of demand and supply set as an example of the case, the demand reduction request server calculates and sends incentive correction information (the incentives for the individual customers) to the controller. Moreover, the controller includes, when receiving a demand reduction request from the demand reduction request server, the function that always monitors the operating state of the connected load device and measures energy use information and data of a change in the reduction method, the function that manages data on the storage unit, and the function that sends data to the demand reduction request server via a network.

It is noted that as described above, the participators who perform the operations are energy suppliers and energy customers. However, there may be an aggregator who mediates the operations between the supplier and the customer for making a contract and adjusting incentives, for example. In the contract phase, the customer makes a contract with the supplier or the aggregator, and installs the controller for acquiring the energy use situations real time on the base on the customer side. The controller is connected to a network that communicates information with the load facility such as a LAN (Local Area Network), and includes a sensor that can acquire the energy use situations from the load facility. Moreover, the controller holds the program that calculates incentives based on the correlation model of the tendency of demand and supply set by the supplier on the storage unit. For an example of the program using the correlation model of the tendency of demand and supply, the program of the incentive calculation process is performed in which a large number of air conditioners are operated to increase energy demand in the case where the temperature is high in the summer season and a model is used for returning a large amount incentive for the amount of a reduction in demand at this time.

In the incentive calculation phase, the display content of the incentive is updated at certain time intervals or the timing of change from the controller. Moreover, when the customer selects the load device and the reduction method on the screen displayed on the display unit of the controller or the connected display device, the controller sends a control instruction of reducing demand of the relevant load device. Furthermore, in addition to the customer manually selecting the relevant load device when demand is reduced, the customer or the aggregator sets incentive values and time at which demand is reduced in advance on the controller for the conditions of reducing demand and can set a program on the storage unit of the controller to perform the process of automatically reducing the demand of the relevant load device when the conditions are satisfied. In addition, the controller monitors the conditions for a reduction in demand, and automatically instructs the relevant load device to reduce demand when the conditions are satisfied. Moreover, the controller displays the demand reduction request sent from the demand reduction request server together with incentive information about the individual load devices. Furthermore, when the relevant load device receives the control instruction from the controller, the relevant load device reduces energy consumption by the specified reduction method.

In the adjustment phase, the operations are performed in which the incentive is returned to the customer as matched with the demand reduction performance and the incentives are dynamically fed back to the individual customers based on the demand reduction performance. Moreover, the process is performed in which the controller sends incentive information to the demand reduction request server of the supplier real time or at regular time intervals in a certain period such as once a day or a month and the demand reduction request server discounts the received incentive information from the electricity rate or returns incentives as points or cash, for example.

In the embodiment, with the configurations above, the problem can be solved by performing the process, in which incentive data that evaluates the demand and supply situations and the values of the customer to reduce demand at peak demand for energy supply is held, incentives are calculated as matched with the data and incentives are determined before the customer reduces demand.

Moreover, in the energy demand reduction system according to the embodiment, the first effect is that the controller always acquires the performance of the amount of demand in the facility in a certain time unit (such as a five-minute interval) when requesting a reduction, and incentives can be determined real time by calculating the amount of a reduction from the difference from the start time (one time earlier), so that the supplier can shorten the operation time involved in the adjustment of incentives, and the customer can receive incentives earlier.

The second effect is that incentives are determined individually for the load devices and the reduction methods before the customer takes the action of reducing demand and the screen is displayed on the display unit of the controller individually for the load devices and the reduction methods, so that the customer can grasp incentives for a reduction in demand in advance, and can take a convincing demand action.

The third effect is that the supply plan and the demand and supply situations are acquired and dynamic incentives matched with the situations can be calculated in advance, so that it is possible to avoid the occurrence of expensive incentives disadvantageous to the supplier even in the case where there are a large number of customers who reduce an over-achieved amount of demand. Moreover, it is possible to prevent a sudden reduction in demand by the customer. Thus, influence on the preset supply plan can be made smaller, and both of the stability and economy of energy supply can be secured.

The fourth effect is that incentives are changed according to the individual customers based on the number of the load devices at the customer, the amount of demand, the demand schedule, and the execution history of the customer reducing demand in the past, so that it is possible to return a high incentive to the customer who is highly likely to reduce demand and to the customer whose mount of a reduction in demand is great. Thus, it is possible to encourage the customer to reliably reduce demand, and it is possible to improve the certainty of a reduction in demand, leading to stabile energy supply. Moreover, the customer contributing to reducing a large amount of demand at peak demand for supply is evaluated for a greater contribution, so that it is possible to provide a feeling of fairness more than the evaluation of the number of times, and it is possible to forecast that customers taking a more effective action are gathered. In addition to this, in the case where the customer is reluctant to take an action of reducing demand because of the forecast that incentives will be increased due to acceleration of peak demand for supply, the stability of energy supply might be impaired. In this case, an expensive incentive is updated and set to a quick response customer when requesting a reduction in demand, leading to securing the stability of energy supply.

The fifth effect is that the demand reduction request server of the supplier dynamically calculates incentives on the controller on the customer side using the correlation model with demand such as "the temperature" when demand is reduced, so that it is possible to eliminate an enormous amount of concentrated calculation for incentives for the individual customers, leading to preventing the occurrence of process loads and network loads (congestion) between the electric power company and the customers. Moreover, even in the case where the incentive calculation program preset on the controller is changed, it is possible to reduce the collection process involved in data processing for incentive calculation and the information volume by sending only the correction values.

As described above, the system is applicable to various techniques that control the amount of a reduction in demand in which an appropriate incentive (a reward) to the effect of reducing demand is provided for the customer in consideration of the supply plan and the demand and supply situations in demand response (DR) in which a customer reduces energy demand at peak demand for energy supply.

Lastly, the invention is not limited to the conditions assumed in the embodiment. In the present invention, the electric power company includes business entities such as business entities for power generation, business entities for power transmission, and business entities for power distribution collectively. However, a business entity may be separated based on functions to conduct businesses. At this time, in the case of requesting a reduction in demand, it is assumed that any one of the business entities makes a request.

Moreover, only the action of reducing the demand of the load device is taken when a demand reduction request is received from the electric power company. However, the customer may generate electric power using a self-owned power generating facility, for example, in order to reduce the amount of electric power received and purchased from the electric power company. At this time, it is the same as the case where the possible reductions of the individual load devices are stored on the possible reduction 325 in the device table 202 when demand is reduced, and it is assumed that a reduction in demand can be implemented when the reduction level of the self-owned power generating facility is "ON".

Furthermore, the operation flow according to the embodiment shows DR performed only by the supplier and the customer. However, the foregoing aggregator who mediates a contract and the operations between the supplier and the customer may execute the operations for the supplier and the customer. In addition, the aggregator may control the customer to stop the load facility for a reduction in demand or to operate the self-owned power generating facility or may encourage the customer to take an action of reducing demand, for example.

Moreover, in the logic of calculating incentives using a correlation model with the temperature according to the embodiment, locations at which information about the temperature is acquired may be a device such as a thermometer connected to the controller for measuring the temperature or may be a temperature information service provided at the server of the external network. Furthermore, in the case where the outside air temperature can be measured, the device may be a thermometer mounted on the controller for measuring the temperature.

In addition, in a reduction in demand according to the embodiment, a practical method is shown for solving peak demand for supply due to peak demand. However, the method may be used for solving peak demand for supply in the case where the amount supplied is short because of unstable supply caused by the failure of the supply facility or by renewable power shortage due to weathers, for example. Moreover, also in the case where electric power is excessively supplied, for example, in order to level energy demand and supply, correction involved in incentive calculation may be performed in which incentives are returned to a customer who stores electric power on a rechargeable battery, for example. Furthermore, electric power stored on the rechargeable battery may be used in peak demand hours when demand is reduced for decreasing electric power received from the electric power company.

In addition, in the embodiment, a push type form is shown in sending a communication message between the demand reduction request server of the electric power company and the controller and between the controller and the load device in which the sender side can one-sidedly send a message and the receiver can receive the message. However, the invention may be implemented by a pull type form in which a data holder is requested to receive data and data is acquired through a return message.

Moreover, the system configuration according to the embodiment shows the method in which business entities install a server and a controller on the base of the business entities. However, the invention may be implemented by being applied to a cloud configuration in which a server is constructed on an external network and services to implement a reduction in demand are provided via the external network such as the Internet or applied to a package type configuration formed of a plurality of similar demand reduction request servers.

Features, components and specific details of the structures of the above-described embodiments may be exchanged or combined to form further embodiments optimized for the respective application. As far as those modifications are apparent for an expert skilled in the art they shall be disclosed implicitly by the above description without specifying explicitly every possible combination.

## Claims

1. An energy demand reduction system that reduces energy demand comprising:
a demand reduction request server (101); and
a controller (141), wherein:
the demand reduction request server (101) includes:
a demand-and-supply status acquiring unit (104) configured, based on an amount of energy supplied from a supply facility and an amount of energy demand by forecasting demand according to a past demand performance, to determine whether peak demand for supply of the energy is taken place and to acquire a customer incentive expressing an incentive for a customer who reduces demand for the energy and correlation information in correlation with demand for the energy;
an incentive calculating unit configured, when it is determined that the peak demand for supply is taken place, to determine a correlation incentive expressing an incentive corresponding to the correlation information, to send a load device (180) using the energy, the customer incentive, and the correlation incentive to the controller managing the load device, and to request a reduction in demand for the energy; and
an incentive returning unit configured to acquire a demand reduction performance of the energy on the load device from the controller, to evaluate the acquired demand reduction performance, to return an incentive under a situation expressed by the correlation information to the customer, and to feed back a result of the evaluation to the customer incentive; and
the controller (141) includes:
a display unit (150);
an incentive calculating unit configured, based on the customer incentive and the correlation incentive received from the demand reduction request server, to find an incentive for the customer under a situation expressed by the correlation information and to display the found incentive and the load device (180) received from the demand reduction request server on the display unit (150);
a load control instruction unit (143) configured to accept a manipulation from the customer and to instruct the load device (180) displayed on the display unit to reduce demand for the energy; and
a reduction information notifying unit (147) configured to send a demand reduction performance of the energy performed at the load device (180) in response to the instruction from the load control instruction unit (143) to the demand reduction request server.

2. The energy demand reduction system according to claim 1,
wherein in the demand reduction request server, the incentive calculating unit corrects the correlation incentive according to a change in the correlation information, and sends the corrected correlation incentive to the controller.

3. The energy demand reduction system according to claim 1 or 2, wherein:
the controller includes a device state monitoring unit configured to acquire an amount of the energy used that is measured at the load device from the load device and to send the used amount to the demand reduction request server; and
in the demand reduction request server, based on the used amount and an amount of the energy reduced received from the controller, the incentive returning unit finds an amount of the energy reduced as the demand reduction performance and weights the incentive according to a size of the found amount of a reduction.

4. The energy demand reduction system according to any one of claims 1 to 3,
wherein in the demand reduction request server, the incentive returning unit finds a time period for which the incentive calculating unit requests a reduction in demand for the energy and the controller accepts a manipulation from the customer, and weights the incentive according to a length of the found time period.

5. An energy demand reduction method for reducing energy demand comprising the steps of:
acquiring demand and supply situations in which based on an amount of energy supplied from a supply facility and an amount of energy demand by forecasting demand according to a past demand performance, it is determined whether peak demand for supply of the energy is taken place and a customer incentive expressing an incentive for a customer who reduces demand for the energy and correlation information in correlation with demand for the energy are acquired;
calculating an incentive in which when it is determined that the peak demand for supply is taken place, a correlation incentive expressing an incentive corresponding to the correlation information is determined, a load device using the energy, the customer incentive, and the correlation incentive are sent to the controller managing the load device, and a reduction in demand for the energy is requested;
calculating an incentive in which based on the customer incentive and the correlation incentive received from the demand reduction request server, an incentive for the customer under a situation expressed by the correlation information is found and the found incentive and the load device received from the demand reduction request server are displayed on a display unit;
instructing controlling a load in which a manipulation from the customer is accepted and the load device displayed on the display unit is instructed to reduce demand for the energy;
notifying reduction information in which a demand reduction performance of the energy performed at the load device in response to the instruction from a load control instruction unit is sent to the demand reduction request server; and
returning an incentive in which a demand reduction performance of the energy on the load device is acquired from the controller, the acquired demand reduction performance is evaluated, an incentive under a situation expressed by the correlation information is returned to the customer, and a result of the evaluation is fed back to the customer incentive.

6. The energy demand reduction method according to claim 5,
wherein in the incentive calculating step, the correlation incentive is corrected according to a change in the correlation information and the corrected correlation incentive is sent to the controller.

7. The energy demand reduction method according to claim 5 or 6, comprising the step of monitoring a device state in which an amount of the energy used that is measured at the load device is acquired from the load device and the used amount is sent to the demand reduction request server,
wherein in the incentive returning step, based on the used amount and an amount of the energy reduced received from the controller, an amount of the energy reduced is found as the demand reduction performance and the incentive is weighted according to a size of the found amount of a reduction.

8. The energy demand reduction method according to any one of claims 5 to 7,
wherein in the incentive returning step, a time period is found for which an incentive calculating unit requests a reduction in demand for the energy and the controller accepts a manipulation from the customer and the incentive is weighted according to a length of the found time period.
